# EUROPÄISCHE PATENTSCHRIFT

(11) **EP 0 471 051 B1**
(45) Veröffentlichungstag und Bekanntmachung des Hinweises auf die Patenterteilung: **19.10.1994**
(21) Anmeldenummer: 91904516.1
(22) Anmeldetag: 25.02.1991
(51) Int. Cl.: H04L 12/56

(54) **STEUEREINHEIT FÜR DEN ZENTRALSPEICHER EINES ATM-KNOTENS**
CONTROL UNIT FOR THE CENTRAL STORE OF AN ATM NODE
UNITE DE COMMANDE POUR LA MEMOIRE CENTRALE D'UN NOEUD ATM

(30) Priorität: 02.03.1990 CH 665/90
(43) Veröffentlichungstag der Anmeldung: 19.02.1992
(73) Patentinhaber: ASCOM TECH AG, CH-3018 Bern (CH)
(72) Erfinder: KELLER, Hansjörg, CH-3125 Toffen (CH); RAO, Sathyanarayana, CH-3015 Bern (CH); SCHÜRCH, Heinz-Christoph, CH-3084 Wabern (CH)
(74) Vertreter: Schwerdtel, Eberhard, Dr.
(86) Internationale Anmeldenummer: CH9100044
(87) Internationale Veröffentlichungsnummer: WO9113505

(56) Entgegenhaltungen:
- EP-A- 0 113 639
- EP-A- 0 299 473
- EP-A- 0 336 373
- FR-A- 2 549 673

## Beschreibung

Die Erfindung betrifft die Steuereinheit zum Steuern des Zentralspeichers eines ATM-Knotens entsprechend dem Oberbegriff von Anspruch 1. Sie betrifft weiter das Verfahren zum Betrieb dieses Knotens.

Unter der Bezeichnung ATM (Asynchronous Transfer Mode) ist eine Technik der Breitband-Kommunikation im Bereich von etwa 155 bis 622 Mbit/s oder weit mehr bekannt. Hierbei handelt es sich um eine Art von paketvermittlung, wobei die Pakete adressiert sind und einheitliche Länge besitzen. Im folgenden werden diese Pakete in Anpassung an die englischsprachige Literatur mit "Zellen" (cell) bezeichnet.

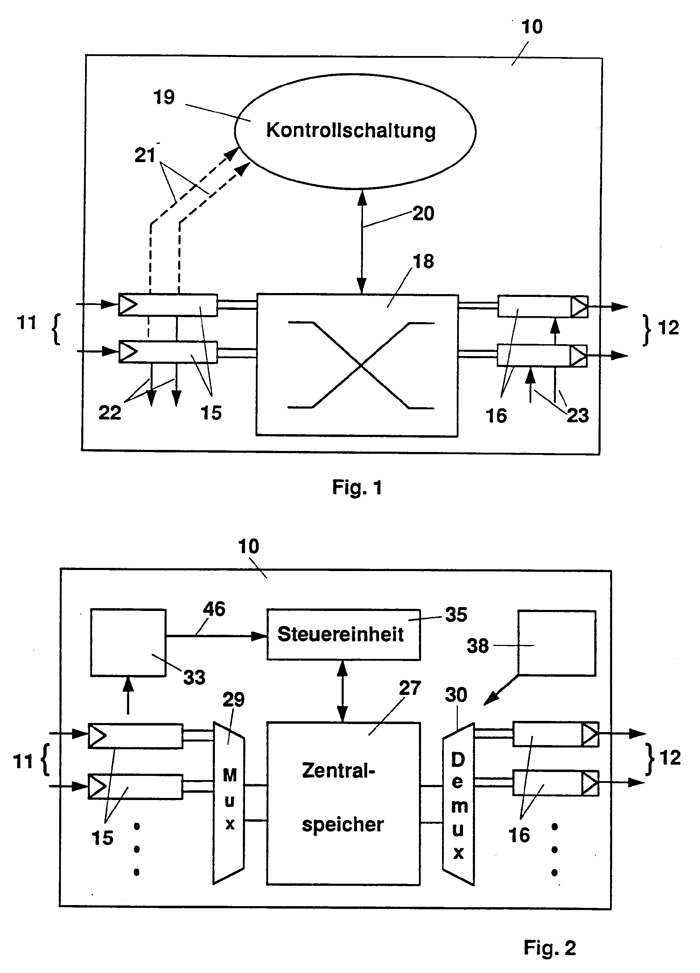

Zur zielgerichteten Vermittlung der Zellen dienen ATM-Knoten, wie sie nachfolgend anhand von Fig. 1 allgemein beschrieben werden.

ATM-Knoten können sehr verschieden aufgebaut sein. Als vorteilhaft erscheint besonders die Art, bei der entsprechend dem Patent BE 904 100 ein Zentralspeicher verwendet wird, da hierdurch das Problem des Blockierens einer der abgehenden Leitungen oder gar des gesamten Knotens leicht überwunden werden kann.

Aus der Schrift EP-A-299 473 ist ein derartiger ATM-Knoten im einzelnen bekannt. Dieser Knoten besitzt einen Hauptspeicher (main buffer), über den alle Zellen ausgesandt werden, einen Adressen-Zeiger-Speicher (address pointer) zur Verwaltung der Adressen des Hauptspeichers und einen dritten Speicher zur Verwaltung der Leerplätze des Hauptspeichers (idle address FIFO). Der Adressen-Zeiger-Speicher umfasst unter anderem eine ganze Reihe von Registern. Diese Register sind individuell den abgehenden Leitungen zugeordnet. Sie dienen jeweils zum Speichern der Adressen derjenigen Speicherblöcke des Hauptspeichers, in denen die Zellen abgespeichert sind, die als nächste auf die jeweils zugeordnete abgehende Leitung ausgesendet werden sollen bzw. in welche die nächsten ankommenden Zellen eingespeichert werden sollen. Die Information, wieviel Zellen gespeichert sind und in welchen Speicherblöcken, ist den Zellen jeweils beigeordnet und mit diesen im Hauptspeicher gespeichert. Auf diese Information kann damit nicht ohne weiteres zugegriffen werden.

Eine weitere Schrift EP-A-336 373 des gleichen Anmelders beschreibt einen sehr ähnlichen ATM-Knoten, wobei hierbei das Schwergewicht bei der sogenannten Rundsende-Fazilität liegt, d.h. der Möglichkeit, ausgewählte Zellen nicht nur an jeweils einen einzigen sondern an eine frei bestimmbare Anzahl von Adressaten zu senden.

Der bekannte ATM-Knoten vermengt durch seinen Aufbau die eigentliche Speicherfunktion des Hauptspeichers mit den Logik- und Steuerfunktionen zum gezielten Einspeichern und Auslesen der Zellen. Dies ist ein wesentliches Handicap, das sich in unübersichtlicher Logik und Unflexibilität manifestiert. Insbesondere erfordert dieser Aufbau umfangreiche Spezial-Chips (VLSI very large scale integration bzw. custom chips), die einen erheblichen Entwicklungsaufwand erfordern.

Es ist die Aufgabe der Erfindung, hier eine billigere und flexiblere Lösung anzugeben. Hierdurch soll ein ATM-Knoten erreicht werden, der im Aufbau klarer und in seiner Betriebsfunktion erheblich einfacher und damit billiger und zuverlässiger ist. Weiter soll der reale Aufbau nach Möglichkeit mit weniger komplexen Halbleiterbausteinen möglich sein.

Die Lösung der Erfindung wird durch den kennzeichnenden Teil der unabhängigen Ansprüche gegeben. Die anderen Ansprüche geben Ausgestaltungen der Erfindung an.

Im folgenden wird die Erfindung anhand von elf Figuren beispielsweise näher beschrieben. Es zeigen:
Fig. 1 - Allgemeiner Aufbau eines ATM-Knotens (Stand der Technik)
Fig. 2 - Blockschaltbild eines ATM-Knotens mit Zentralspeicher (Stand der Technik)
Fig. 3 - Blockschaltbild einer Steuereinheit des Zentralspeichers
Fig. 4 - Blockschaltbild der Steuereinheit mit detaillierter Bus- und Steuerlogik
Fig. 5 - Beispielsweiser Aufbau und Inhalt des Zentralspeichers
Fig. 6 - Inhalt des Zentralspeichers in Form von Warteschlangen
Fig. 7 - Inhalt des P-Speichers in Listenform
Fig. 8 - Ablaufschema für das Aussenden einer Zelle aus dem Zentralspeicher
Fig. 9 - Ablaufschema für das Einspeichern einer Zelle in den Zentralspeicher
Fig. 10 - Blockschaltbild einer Prioritätslogik
Fig. 11 - Blockschaltbild einer Rundsendelogik.

Fig. 1 zeigt ein sehr allgemeines Blockschaltbild eines ATM-Knotens 10. Dieser Knoten 10 ist mit einer ersten Mehrzahl n von ankommenden Leitungen 11 und mit einer zweiten Mehrzahl m von abgehenden Leitungen 12 verbunden. n und m können gleich oder ungleich sein und einen Wert von 2 bis mehrere hundert haben. Zellen, die für die abgehenden Leitungen 12 bestimmt sind, können mehrere verschiedene Prioritäten p aufweisen.

Jeder ankommenden Leitung 11 ist ein Pufferspeicher 15 nachgeschaltet und jeder abgehenden Leitung 12 ein Pufferspeicher 16 vorgeschaltet. Über diese Pufferspeicher 15, 16 sind die Leitungen 11, 12 mit einer Schalteinheit 18 (switch) verbunden. Diese Schalteinheit 18 wird durch eine Kontrollschaltung 19 (control unit) gesteuert, was durch einen Doppelpfeil 20 angedeutet ist.

Über die ankommenden Leitungen 11 erreichen ständig adressierte Pakete konstanter Länge den Knoten 10. Diese Pakete werden im folgenden als Zellen Z (cell) bezeichnet. (Eine Zelle besteht beispielsweise aus einem Kopf (header) von 5 Bytes bzw. Oktetten, gefolgt von der Nutzinformation von 48 Oktetten.) Aus dem Kopf dieser Zellen Z entnimmt die Kontrollschaltung vor allem die jeweils notwendige Steuerinformation (header information), auf welche der abgehenden Leitungen 12 die jeweilige Zelle Z ausgesendet werden soll und definiert den neuen Kopf der abzusendenden Zelle. Dies ist durch die gestrichelten Pfeile 21 angedeutet. Zellen Z ohne Nutzinformation, sogenannte Leerzellen (empty cells), werden nach den Pufferspeichern 15 ausgeschieden, was die Pfeile 22 andeuten. Sind dem gegenüber keine Zellen Z auf die abgehenden Leitungen 12 auszusenden, so werden statt dessen Leerzellen ausgesandt, was die Pfeile 23 andeuten. Zellen können im Sinne einer Verteilfunktion (multicast) oder allgemeinen Rundsendefunktion (broadcast) auch auf mehrere im voraus bestimmte oder alle Leitungen ausgesandt werden.

Der ATM-Knoten 10 erfüllt nach dem Beschriebenen die Funktion einer Vermittlungszentrale zur laufenden Weiterleitung der ankommenden Zellen Z auf die abgehenden Leitungen 12. Hierbei ist natürlich als Nebenforderung zu berücksichtigen, dass nach Möglichkeit nirgends ein Verlust von Zellen Z vorkommen sollte.

Fig. 2 zeigt das Blockschaltbild eines solchen ATM-Knotens 10, der einen Zentralspeicher 27 (common memory) mit einer dritten Mehrzahl k von Speicherblöcken aufweist. In diesen Speicher 27 wird grundsätzlich jede ankommende Zelle Z eingespeichert, bevor sie auf eine der abgehenden Leitungen 12 wieder ausgesandt wird. Dieser Zentralspeicher 27 verhindert durch seine Pufferwirkung weitgehend, dass Zellen verloren gehen und ist bevorzugt so organisiert, dass in zeitserieller Weise jeweils nur eine einzige Zelle Z einlesbar bzw. auslesbar ist, d.h. er arbeitet zeitseriell. Zu diesem Zweck ist zwischen die Pufferspeicher 15 der ankommenden Seite und den Speicher 27 ein Multiplexer 29 eingefügt. Dieser bewirkt in zyklischer Reihenfolge die Abfrage der Pufferspeicher 15.

Analog zur Eingangsseite des ATM-Knotens 10 ist ausgangsseitig zwischen den Zentralspeicher 27 und die Pufferspeicher 16 der abgehenden Leitungen 12 ein Demultiplexer 30 eingefügt. Dieser leitet die aus dem Zentralspeicher 27 ausgelesenen Zellen Z jeweils gesteuert auf diejenige der abgehenden Leitungen 12, die eingangsseitig durch Lesen der Steuerinformation durch eine Adressenleseeinheit 33 jeweils bestimmt worden war.

Der Zentralspeicher 27 wird durch eine Steuereinheit 35 gesteuert, wobei die hierzu jeweils notwendige Steuerinformation ausschliesslich von der Adressenleseeinheit 33 geliefert wird. Zum Koordinieren der Einheiten des ATM-Knotens 10 mit dem Zentralspeicher 27 dient schliesslich ein Sequenzer 38, der die einzelnen Funktionsschritte der Einheiten auslöst und aufeinander abstimmt.

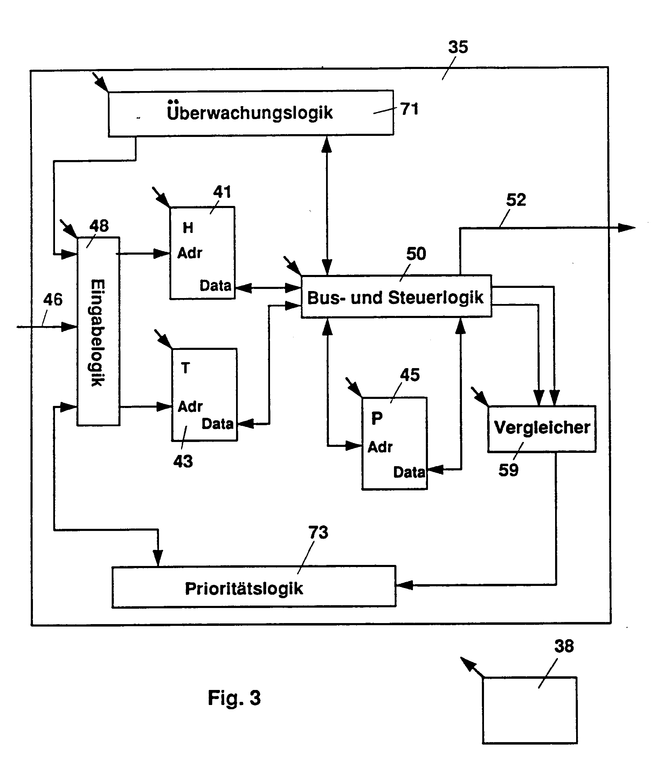

Fig. 3 zeigt das Blockschaltbild der in Fig. 2 gezeigten Steuereinheit 35 sowie den Sequenzer 38. Die Steuereinheit 35 umfasst als wichtigste Einheiten drei adressierbare Schreib/Lese-Speicher 41, 43, 45, vorzugsweise RAM-Speicher (random access memory), die je einen Adressen-Eingang Adr und einen Ein/Ausgang Data für die in den Speicherplätzen zu speichernden Daten aufweisen.

Der erste Schreib/Lese-Speicher 41, im folgenden H-Speicher genannt (H = head) besitzt (m+1) Speicherplätze, wobei m die genannte zweite Mehrzahl von abgehenden Leitungen 12 ist. (Im folgenden Beispiel ist m gleich vier.) Die Speicherplätze des H-Speichers 41 sind individuell je einer dieser abgehenden Leitungen 12 zugeordnet und mit griechischen Buchstaben α, β, δ, µ bezeichnet. Dazu kommt ein (m+1)ter Speicherplatz, bezeichnet mit 0, der einer noch zu beschreibenden Leerplatz-Liste zugeordnet ist.

Der Inhalt der Speicherplätze 0, α, β, δ, µ des H-Speichers 41 ist jeweils eine noch zu beschreibende Adresse eines Kopfelementes.

Der H-Speicher 41 wird durch den Sequenzer 38 und eine Zeigersteuerung in Abhängigkeit von den ankommenden Zellen weitergestellt, wobei die Inhalte der Speicherplätze α, β, δ, µ jeweils in noch zu beschreibender Art ausgelesen und eingeschrieben werden. Der Speicherplatz 0 erfährt jeweils eine Sonderbehandlung.

Der zweite Schreib/Lese-Speicher 43, im folgenden T-Speicher genannt (T = tail) ist ähnlich wie der H-Speicher 41 aufgebaut. Seine Speicherplätze sind dem entsprechend ebenfalls mit den griechischen Buchstaben α, β, δ, µ sowie mit 0 bezeichnet. Der Inhalt der Speicherplätze ist ebenfalls jeweils eine Adresse. Die Zeigersteuerung wählt die Speicherplätze jedoch zyklisch an.

Der dritte Schreib/Lese-Speicher 45, im folgenden P-Speicher genannt (P = pointer), bildet ein Abbild des Zentralspeichers 27. Er besitzt die gleiche Anzahl k Speicherplätze wie der Zentralspeicher 27 Speicherblöcke. Die Speicherplätze und die Speicherblöcke besitzen paarweise die gleichen Adressen. Der Unterschied zwischen den beiden Speichern besteht darin, dass der Inhalt der Speicherplätze des P-Speichers jeweils eine (kurze) Adresse ist, während der Inhalt der Speicherblöcke des Zentralspeichers jeweils eine (umfangreiche) Zelle Z ist.

Die Steuereinheit 35 umfasst weiter einen Steuerinformations-Eingang 46, eine Eingabelogik 48, eine Bus-und Steuerlogik 50, einen Ausgang 52, einen Vergleicher 59, eine Überwachungslogik 71 und eine Prioritätslogik 73. Alle diese Einheiten werden durch den Sequenzer 38 sequentiell geschaltet bzw. angetriggert, was durch schräg gestellte Pfeile angedeutet ist.

Die Eingabelogik 48 stellt die Verbindung zwischen dem Steuerinformations-Eingang 46 (herkommend von der Adressenleseeinheit 33, Fig. 2), der Überwachungslogik 71 sowie der Prioritätslogik 73 und den Adressen-Eingängen Adr des H-Speichers 41 und des T-Speichers 43 her.

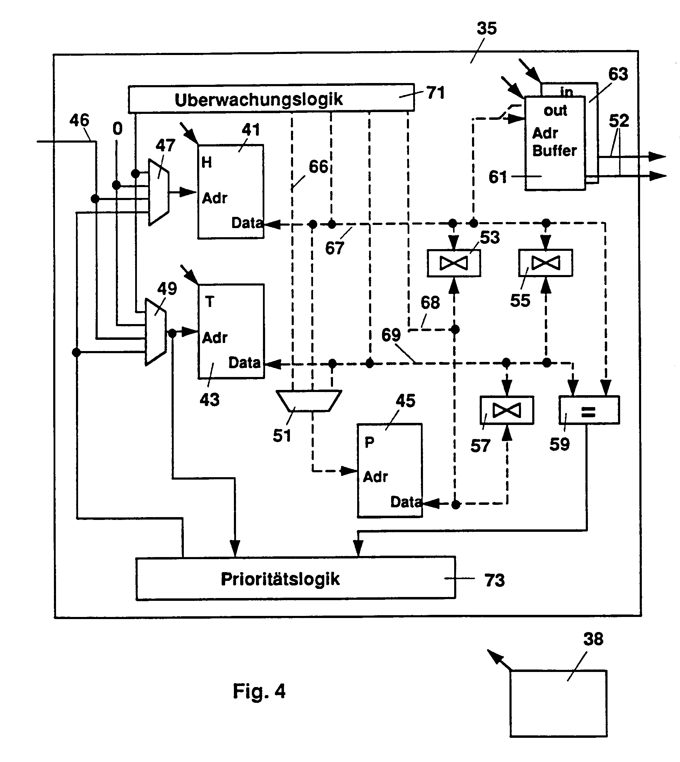

Fig. 4 zeigt die Bus- und Steuerlogik 50 mehr im Detail. Diese Logik 50 besteht aus mehreren zusammenwirkenden Busleitungen 66, 67, 68, 69 und aus in diese eingefügten Steuermitteln wie Multiplexer 51 und Transceiver 53, 55, 57. Die Logik 50 verbindet die Ein/Ausgänge Data des H-Speichers 41 und des T-Speichers 43 mit beiden Eingängen (Adr. und Data) des P-Speichers 45, mit der Überwachungslogik 71, mit dem Vergleicher 59 und mit dem Ausgang 52. Vor dem Ausgang 52 sind noch zwei Ausgangsbuffer 61, 63 geschaltet. Der Ausgang 52 selbst ist eine gerichtete Busleitung hin zum Zentralspeicher 27 und mit dessen Adresseneingang verbunden. Die Eingabelogik 48 besteht im wesentlichen aus zwei Signalmultiplexern 47, 49, die die Adress-Signale für den H-Speicher 41 bzw. den T-Speicher 43 koordinieren. Zum Anwählen der Leerplatz-Liste 0 besitzen die Multiplexer 47, 49 Eingänge mit der Bezeichnung 0.

Die Prioritätslogik 73 ist eine Option der Steuereinheit 35 und wird später noch eingehend beschrieben. Sie hat nur dann eine Bedeutung, wenn den Zellen Z unterschiedliche Prioritäten für das Weiterleiten zugeordnet sind, z.B. "eilig" und "normal". Vorerst werden jedoch nur Zellen einer einzigen Priorität betrachtet.

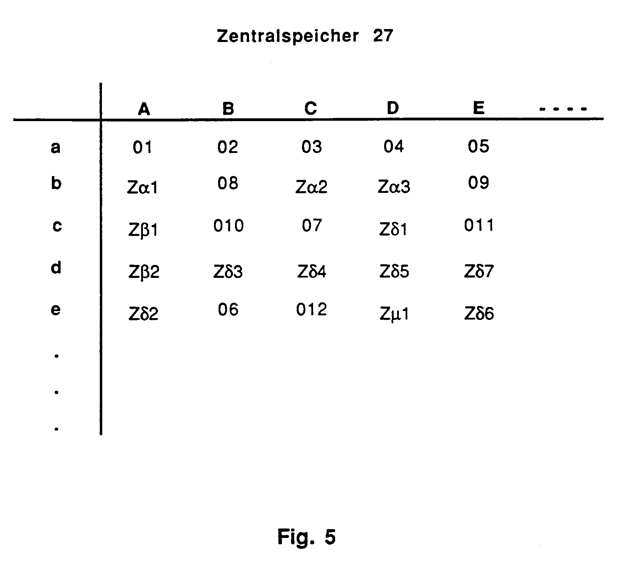

Zur Beschreibung der Arbeitsweise des Zentralspeichers 27 und der zugehörigen Steuereinheit 35 wird auf die folgenden Figuren verwiesen, wobei ein Beispiel gegeben wird, das einem momentanen Speicherzustand zugeordnet ist. Fig. 5 zeigt hierzu die Adressen und den momentanen Inhalt der Speicherblöcke des Zentralspeichers 27. Dieser Speicher ist beispielsweise karthesisch aufgebaut, wobei den Spalten die Adressen A, B, C, D, E, ... und den Zeilen die Adressen a, b, c, d, e, ... zugeordnet sind. Gezeigt ist aus praktischen Gründen nur der Inhalt der fünfundzwanzig Speicherblöcke mit den Blockadressen Aa bis Ee.

Den Inhalt der Speicherblöcke des Zentralspeichers 27 bilden - wie beschrieben - zwischengespeicherte Zellen Z oder der Inhalt ist leer. Im letzteren Fall ist der Block mit 0 und einer Laufnummer 1, 2, 3 ... angeschrieben. Im anderen Fall, d.h. wenn eine Zelle Z gespeichert ist, ist der Block mit Z (für Zelle) und einem griechischen Buchstaben α, β, δ, µ sowie einer Laufnummer 1, 2, 3 ... angeschrieben. Die Buchstaben α, β, δ, µ geben dabei an, auf welche abgehende Leitung 12 die jeweilige Zelle Z abzusenden ist. Die Laufnummern geben an, in welcher zeitlichen Reihenfolge die Zellen Z in den Zentralspeicher 27 eingeschrieben worden sind, sortiert nach abgehenden Leitungen 12. Für jede abgehende Leitung 12 (α, β, δ, µ) existiert damit eine Warteschlange von Zellen Z, die auf das Aussenden warten, wobei diese Zellen zeitlich geordnet sind, erkennbar an den Laufnummern. Dazu kommt die Leerplatz-Menge, d.h. die Anzahl der leeren bzw. verfügbaren Speicherblöcke.

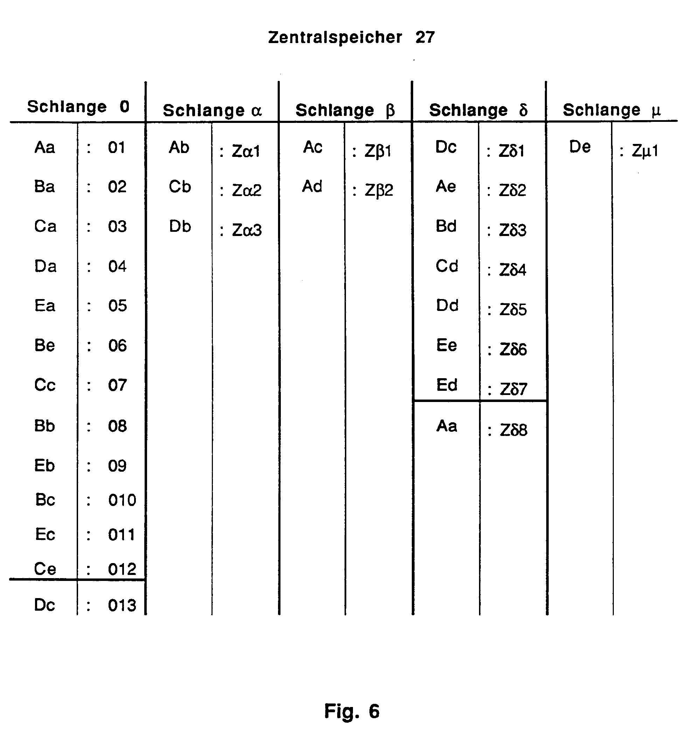

Fig. 6 zeigt die im Zentralspeicher 27 zum betrachteten, beispielsweisen Zeitpunkt enthaltenen Leerplätze 0 sowie die gespeicherten Zellen Z als Warteschlangen. Die Leerplatz-Warteschlange 0 umfasst zwölf Leerplätze 01 bis 012, wobei 01 der "älteste" Leerplatz ist und den Kopf H (head) der Schlange bildet und wobei 012 der "jüngste" Leerplatz ist und den Schwanz T (tail) der Schlange bildet.

Links neben den Leerplätzen sind die Adressen angegeben, unter denen die Leerplätze zu finden sind. Konkret gibt die Leerplatz-Schlange 0 an, welche Speicherblöcke des Zentralspeichers 27 leer sind und in welcher Reihenfolge sie zum Belegen zur Verfügung gestellt werden. Der durch einen Querstrich abgegrenzte dreizehnte Leerplatz 013 bleibt vorerst ausser Betrachtung.

Die Warteschlange der Zellen Z, die vom Zentralspeicher 27 aus auf die abgehende Leitung α ausgesendet werden sollen, umfasst drei Zellen Zα1 bis Zα3. Die entsprechende Schlange der Leitung β umfasst zwei Zellen Zβ1, Zβ2, die Schlange der Leitung δ sieben Zellen Zδ1 bis Zδ7 (Die achte Zelle Zδ8 gilt vorerst als nicht existent.) und die Warteschlange der Leitung µ eine einzige Zelle Zµ1. In jeder Warteschlange gibt die niedrigste Laufnummer (älteste Zelle) den Kopf H und die höchste Laufnummer (jüngste Zelle) den Schwanz T an.

Links neben den Zellen der Warteschlangen sind die Adressen Aa bis Ee angegeben, die den Speicherblöcken des Zentralspeichers 27 zugeordnet sind, in denen die Zellen Z gespeichert sind bzw. die leer sind. Allen Warteschlangen zusammen entsprechen fünfundzwanzig Speicherblöcke entsprechend dem Beispiel von Fig. 5. D.h., in jedem Block des Zentralspeichers 27 wartet entweder eine Zelle Zα1-Zα3, Zβ1-Zβ2, Zδ1-Zδ7, Zµ1 auf das Aussenden oder der Speicherblock ist leer. Hierbei ist aus noch zu beschreibendem Grund zu beachten, dass in den Warteschlangen α, β, δ, µ, die jeweilige Zelle mit der niedrigsten Laufnummer, also die Zelle Zα1, Zβ1, Zδ1 und Zµ1 als bereits abgesendet gelten. Insbesondere die Schlange µ mit nur einer einzigen Zelle Zµ1 ist somit leer. Dieser Schlange entspricht somit keine aus dem Zentralspeicher 27 noch abzusendende Zelle Z.

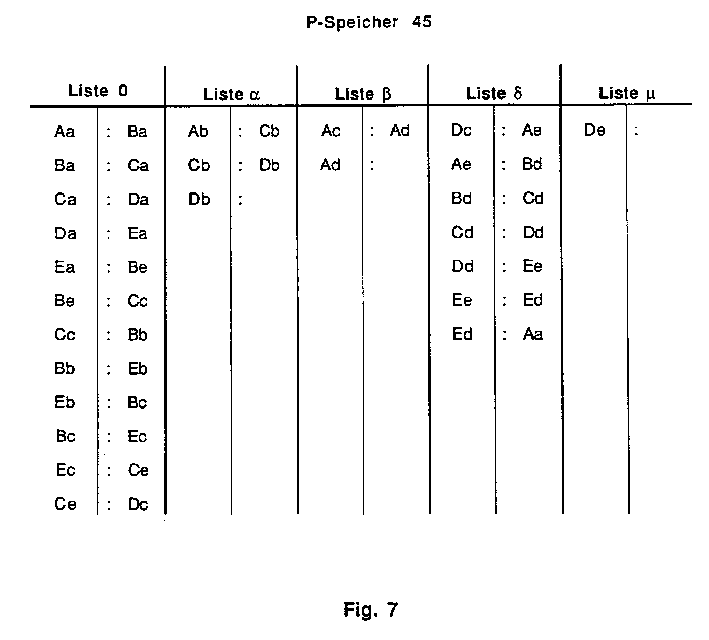

Fig. 7 zeigt in einer Darstellung, die derjenigen von Fig. 6 entspricht, dem P-Speicher 45 zugeordnete Listen. Die Elemente dieser Listen (rechte Spalten) sind Adressen Aa bis Ee, die in den Speicherplätzen des P-Speichers 45 gespeichert sind. Die Adressen Aa bis Ee dieser Speicherplätze des P-Speichers 45 sind in den linken Spalten angegeben. Diese Adressen sind identisch mit den Adressen der zugeordneten Zellen Z in den Speicherblöcken des Zentralspeichers 27 (Fig. 6).

Die Adressen erscheinen damit dreimal als Satz unterscheidbarer Adressen; zum ersten als Adressen der Speicherblöcke des Zentralspeichers 27, zum zweiten als Adressen der Speicherplätze des P-Speichers 45 und zum dritten als Inhalt der Speicherplätze des P-Speichers 45.

Im P-Speicher 45 ist dafür Sorge getragen, dass grundsätzlich nie der Inhalt eines Speicherplatzes gleich ist der zugeordneten Adresse. Hierdurch gibt der Inhalt jedes Speicherplatzes als Adresse an, wo das jeweils zugeordnete nächste Element der jeweiligen Liste 0, α, β, δ, µ abgespeichert ist. Die Listen des P-Speichers 45 sind damit Zeigerlisten (pointer), die ausschliesslich eine jeweilige Reihenfolge festlegen.

Die Information, welche Elemente in den Listen des P-Speichers 45 den Kopf H bzw. den Schwanz T bilden, ist nicht im P-Speicher enthalten. Diese Information steht vielmehr im H-Speicher 41 bzw. im T-Speicher 43. Für die vollständige Information über die Listen des P-Speichers 45 werden damit die drei Speicher 41, 43, 45 zusammen benötigt.

Da die Warteschlangen des Zentralspeichers 27 über ihre Adressen den Listen des P-Speichers 45 zugeordnet sind, ist die Information in den drei Speichern 41, 43, 45 auch die Information, die die Reihenfolge der Warteschlangen angibt. Der Inhalt des P-Speichers 45 gibt damit an, in welchen Blöcken des Zentralspeichers 27 die angekommenen Zellen zwischengespeichert sind und in welcher Reihenfolge sie auf welche abgehende Leitung 12 wieder ausgesendet werden sollen.

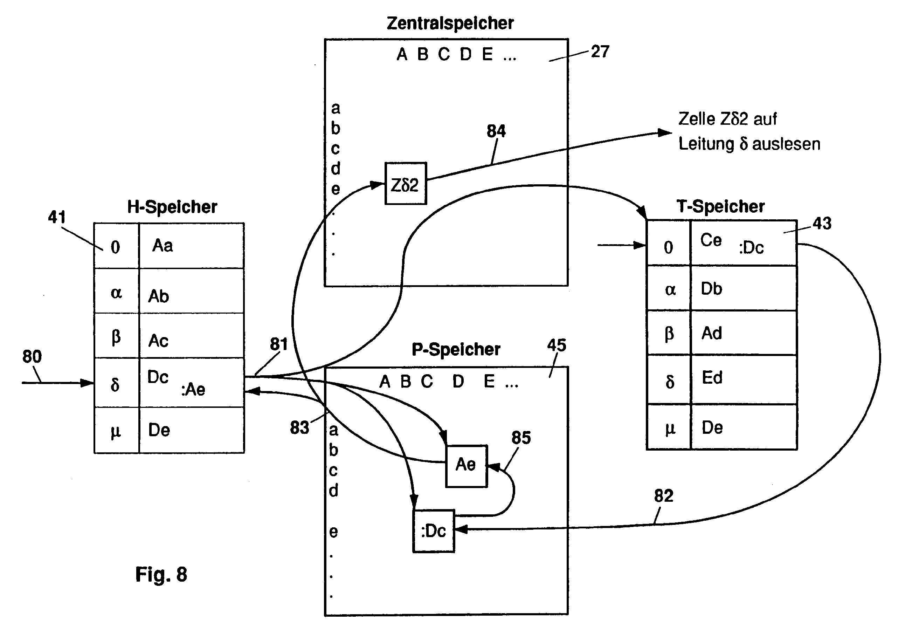

Fig. 8 zeigt - immer noch für das anhand von Fig. 5 eingeführte Beispiel - das Prozedere beim Aussenden einer Zelle Z aus dem Zentralspeicher 27. Hierzu sind alle beschriebenen Speicher 27, 41, 43, 45 gezeigt. Der H-Speicher 41 und der T-Speicher 43 weisen entsprechend dem gewählten Beispiel je fünf Speicherplätze auf. Die Adressen α, β, δ, µ dieser Speicherplätze sind den entsprechend bezeichneten abgehenden Leitungen 12 (α, β, δ, µ) zugeordnet. Dazu kommt die Adresse 0 für die Leerplatzliste. Der Sequenzer 38 (Fig. 2 und 3) zeigt momentan im H-Speicher 41 auf den Speicherplatz mit der Adresse δ, was durch einen Pfeil 80 angedeutet ist.

Der zu Beginn des Auslesevorganges aktuelle Inhalt dieses Speicherplatzes δ ist die Adresse Dc. Diese Adresse wird aus dem H-Speicher 41 ausgelesen (Pfeil 81) und sowohl dem P-Speicher 45 als auch dem T-Speicher 43 zugeführt. Im T-Speicher 43 wird hierdurch der bisherige Inhalt Ce des Speicherplatzes 0 mit Dc überschrieben. Dies bedeutet, dass die Adresse für das bisherige Schwanz-Element Ce durch Dc ersetzt wird. Das neue Schwanzelement der Leerplatzliste ist damit die Adresse Dc. Das bisherige Schwanz-Element Ce dient vor dem Überschreiben noch zum Anwählen des zugeordneten Speicherplatzes Ce im P-Speicher 45 (Pfeil 82). In diesen Speicherplatz wird als Inhalt die neue Adresse Dc eingespeichert. Im P-Speicher 45 wird schliesslich der Speicherplatz Dc angewählt (Pfeil 85) und dessen Inhalt, die Adresse Ae in den H-Speicher 41, Speicherplatz δ, anstelle des bisherigen Inhalts Dc eingeschrieben (Pfeil 83). Gleichzeitig wird die neue Adresse Ae dem Zentralspeicher 27 als Adresse zugeführt. Im Zentralspeicher wird hierdurch der zugeordnete Block angewählt und dessen Inhalt, die Zelle Zδ2 auf die Leitung δ der abgehenden Leitungen 12 ausgesendet (Pfeil 84).

Durch diese Verfahrensschritte werden somit die Zelle Zδ2 als zweitälteste Zelle für die Leitung δ wie gewünscht ausgesendet. Im Zentralspeicher 27 wird hierdurch der Block Dc frei. Dc wird als Adresse des neuen Schwanzes T, d.h. als Element 013 (Fig.5) der Leerplatz-Liste im T-Speicher 43 notiert. Weiter wird Ae als neuer Kopf H der Liste δ im H-Speicher 41 notiert.

Der Sequenzer 38 kann hierauf zum nächsten Speicherplatz µ des H-Speichers 41 weiterschalten, wodurch die gleichen Verfahrensschritte, nunmehr für die Liste µ und die Leitung µ der abgehenden Leitungen 12 ablaufen, sofern eine Liste µ existiert. Entsprechend dem gewählten Beispiel ist dies jedoch nicht der Fall (Kopf und Schwanz der Liste µ fallen zusammen), so dass in diesem Fall auf die abgehende Leitung µ (12) eine neu gebildete Leerzelle ausgesendet wird.

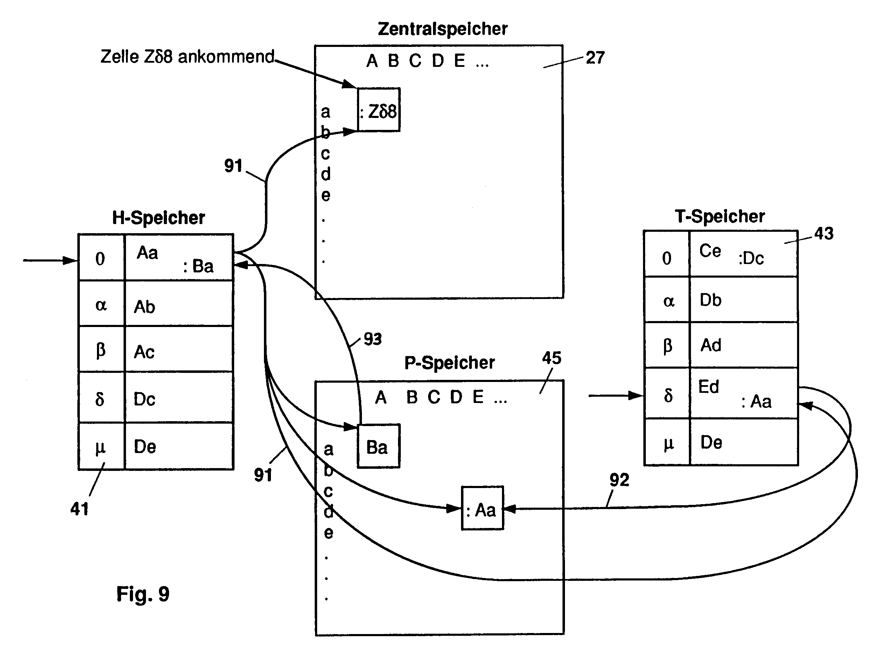

Fig. 9 zeigt analog zu Fig. 8 das Prozedere beim Einspeichern einer ankommenden Zelle Z in den Zentralspeicher 27, wobei diese Zelle später beispielsweise auf die abgehende Leitung δ ausgesandt werden soll. In diesem Fall gibt die Adressenleseeinheit 33 über den Eingang 46 der Eingabelogik 48 an, dass die Liste δ zu behandeln ist. Die Eingabelogik 48 bewirkt sodann, dass aus dem H-Speicher 41 der Kopf der Leerplatz-Liste 0 entnommen wird. Dieser Kopf besitzt die Adresse Aa, die vierfach verwendet wird. Zum ersten gibt diese Adresse im Zentralspeicher 27 an, in welchen Block die ankommende Zelle Zδ8 eingespeichert werden soll. Dies ist - wie gesagt - der Speicherblock der Adresse Aa. Die Zelle Zδ8 bildet nun den neuen Schwanz der Warteschlange δ (Fig. 6). Der bisherige Kopf 01 der Leerplatzschlange 0 ist hiermit verbraucht und wird durch den neuen Kopf 02 ersetzt (Speicherblock mit der Adresse Ba).

Zum zweiten wird im T-Speicher 43, Speicherplatz δ, die gespeicherte Adresse Ed ausgelesen. Diese Adresse wählt im P-Speicher 45 den zugeordneten Speicherplatz an (Pfeil 92), worauf die Adresse Aa in diesen Speicherplatz eingeschrieben wird.

Zum dritten wird die Adresse Aa in den Speicherplatz δ des T-Speichers 43 als neuer Inhalt eingelesen, wobei deren bisheriger Inhalt Ed überschrieben wird.

Zum vierten dient die Adresse Aa im P-Speicher 45 zum Anwählten des Speicherplatzes Aa und zum Lesen der nächsten Adresse (im Beispiel Ba), welche in den Speicherplatz 0 des H-Speichers 41 als neuer Inhalt Ba eingespeichert wird (Pfeil 93).

Durch diese Verfahrensschritte werden die neue Zelle Zδ8 wie gewünscht in den Zentralspeicher 27 eingeschrieben, der hierdurch besetzte Block Aa der Warteschlange δ als Schwanz-Element Zδ8 angehängt und die Leerplatz-Schlange 0 um ihr Kopfelement Aa verkürzt, wodurch Ba ihr neuer Kopf wird. Auch diese Schritte werden durch den genannten Sequenzer 38 gesteuert.

Die bis hierher beschriebene Steuereinheit 35 ist einfach im Aufbau. Der Zentralspeicher 27 dient ausschliesslich zum Zwischenspeichern der Zellen Z und dient damit einer klaren Grundfunktion, die unabhängig ist von der konkreten Realisierung des Speichers. Die Speicherblöcke stehen durchwegs für beliebige Warteschlangen zur Verfügung. Nur leere Warteschlangen belegen jeweils einen einzigen Speicherblock. Hiermit lässt sich der Zentralspeicher 27 sehr gut ausnützen.

Unabhängig vom Zentralspeicher 27 dienen der P-Speicher 45, der H-Speicher 41 und der T-Speicher 43 zur Verwaltung der Speicherblöcke dieses Zentralspeichers. Die hierfür gebildeten Listen 0, α, β, δ, µ spiegeln die Warteschlangen im Zentralspeicher wieder. Neue Warteschlangen lassen sich einfach dadurch initialisieren, dass in jedem der Speicher 41, 43, 45 ein einziger Speicherplatz hierfür bereitgestellt wird. Weiter kann jederzeit auf den P-Speicher 45 durch die Überwachungslogik 71 zugegriffen werden, z.B. für Kontrollzwecke oder Tests, ohne dass der Zentralspeicher 27 hiervon berührt wird. Weiter lassen sich bestehende Warteschlangen einfach miteinander verknüpfen, z.B. zum Zwecke einer Umleitung im Fall von Störungen.

Die Steuereinheit 35 arbeitet mit einem Sequenzer 38. Hierdurch werden die einzelnen Arbeitsschritte in Art einer Walzensteuerung sehr einfach sequenziell gesteuert, ausgelöst bzw. geschaltet. Die Steuereinheit 35 arbeitet somit unkompliziert und schnell, wobei die Speicher- und die Steuerfunktionen klar getrennt sind.

Allgemein lässt sich festhalten, dass grundsätzlich durch das Einspeichern einer Zelle Z in den Zentralspeicher 27 im P-Speicher die Leerplatz-Warteschlange 0 um ihr jeweiliges Schwanzelement verkürzt wird und die der Zelle zugeordnete Warteschlange α, β, δ, µ um ein neues Kopfelement verlängert wird. Umgekehrt bewirkt das Aussenden einer Zelle Z aus dem Zentralspeicher 27 jeweils die Verlängerung der Leerplatz-Warteschlange 0 um ein Element und eine entsprechende Verkürzung der der Zelle zugeordneten Warteschlange α, β, δ, µ.

Besteht eine Liste nur aus einem einzigen Element, besitzen somit Kopf H und Schwanz T der Liste die gleiche Adressse, so ist dies durch den Vergleicher 59 (Fig. 3) feststellbar und die zugeordnete Warteschlange wird als leer betrachtet. In diesem Fall wird jeweils auf die zugeordnete abgehende Leitung 12 eine Leerzelle ausgesendet. Andererseits werden ankommende Leerzellen durch die Adressenleseeinheit 33 (Fig. 2) abgefangen und vernichtet. Insgesamt teilen sich der P-Speicher 45 und der Zentralspeicher 27 damit in beliebiger und völlig flexibler Weise je nach Bedarf auf die verschiedenen Listen bzw. Warteschlangen auf. Im Extremfall kann der gesamte P-Speicher von einer einzigen Liste belegt werden bzw. der Zentralspeicher 27 eine einzige Warteschlange umfassen.

Mit der Leerplatz-Liste 0 hängt zusammen, dass (wie anhand von Fig. 8 beschrieben) beim Aussenden einer Zelle Z jeweils nicht die im H-Speicher 41, Speicherplatz α, β, δ oder µ gespeicherte aktuelle Adresse zum Anwählen des Zentralspeichers 27 dient, sondern die jeweils neu eingespeicherte Adresse.

Damit überhaupt Listen gebildet werden können, müssen zur Initialisierung im P-Speicher 45 eine entsprechende Anzahl von Speicherplätze bereitgestellt werden. Diese Speicherplätze bilden je ein Startelement der Listen α, β, δ, µ. Die übrigen Speicherplätze stehen für die Leerplatzliste bereit. Zum Bilden einer solchen Startfiguration besitzt die Steuereinheit 35 die erwähnte Überwachungslogik 71 (Fig. 3). Anstelle der geschilderten, bevorzugten Konfiguration sind auch beliebige andere Konfigurationen möglich.

Die bis hierher beschriebene Anordnung arbeitet ausschliesslich mit Zellen Z, die alle eine einheitliche, einzige Priorität aufweisen. Damit sind alle diese Zellen Z gleichberechtigt. Im folgenden wird dieses Prinzip erweitert und den Zellen Z in ihrem Kopf zusätzlich zum bisherigen eine Prioritätsangabe zugeordnet, z.B. die Angabe I, II, III mit den Bedeutungen "normal","eilig" und "sehr eilig". Dies bedeutet, dass allgemein eine Anzahl p unterschiedlicher Prioritäten vorgesehen wird

Durch die Prioritätsangabe I, II, III wird jede Zelle Z nicht nur einer abgehenden Leitung 12 zugeordnet, sondern auch der jeweiligen Priorität. Im Zentralspeicher 27 entstehen hierdurch konkurrierende Warteschlangen von Zellen Z, die auf die jeweils gleichen abgehende Leitung 12 ausgesendet werden sollen, wobei das Prinzip First-in/First-out teilweise durchbrochen ist.

Die konkurrierenden Warteschlangen finden im bisher beschriebenen Sinne ihr Pendant in konkurrierenden Listen im P-Speicher 45. Hierzu muss dieser P-Speicher 45 in keiner Weise verändert werden. Es ist jedoch nötig, den H-Speicher 41 und den T-Speicher 43 so zu erweitern, dass jeder abgehenden Leitung 12 nicht nur ein einziger Speicherplatz zugeordnet ist, sondern soviele, wie Prioritäten I, II, III zugelassen sind, beispielsweise drei. Diese Speicherplätze erhalten im Sinne der Figuren 5 bis 9 die Bezeichnungen αI, αII, αIII, βI, βII, .... µIII. Statt der bisher vier + eins Listen α, β, δ, µ, 0 sind damit nun vier x drei + eins Listen vorhanden.

Die Art und Weise der Listen-Veränderung beim Einspeichern einer ankommenden Zelle Z in den Zentralspeicher 27 bleibt gegenüber dem bisherigen vollkommen gleich, abgesehen von der Berücksicktigung der jeweiligen Prioritätsangabe I, II, III.

Das Prozedere beim Auslesen der gespeicherten Zellen Z aus dem Zentralspeicher 27 erfordert dagegen eine gewisse Variierung, da bei zyklischer Berücksichtigung aller abgehenden Leitungen 12 jeweils geprüft werden muss, welche der jeweils konkurrierenden Warteschlangen um eine Zelle Z verkürzt werden soll. Hierbei können (beispielsweise für die abgehende Leitung δ) folgende Möglichkeiten unterschieden werden:
. alle Listen δI, δII, δIII sind leer; in diesem Fall wird eine Leerzelle ausgesandt.
. nur eine der Listen δI, δII, δIII besitzt Elemente; in diesem Fall wird die zugeordnete "älteste" Zelle Zδ aus dem Zentralspeicher 27 ausgelesen und ausgesandt.
. zwei oder drei der Listen δI, δII, δIII besitzen Elemente; in diesem Fall wird die "älteste" Zelle Z derjenigen Warteschlange ausgesandt, die der Liste mit der höchsten Priorität I, II, III zugeordnet ist.

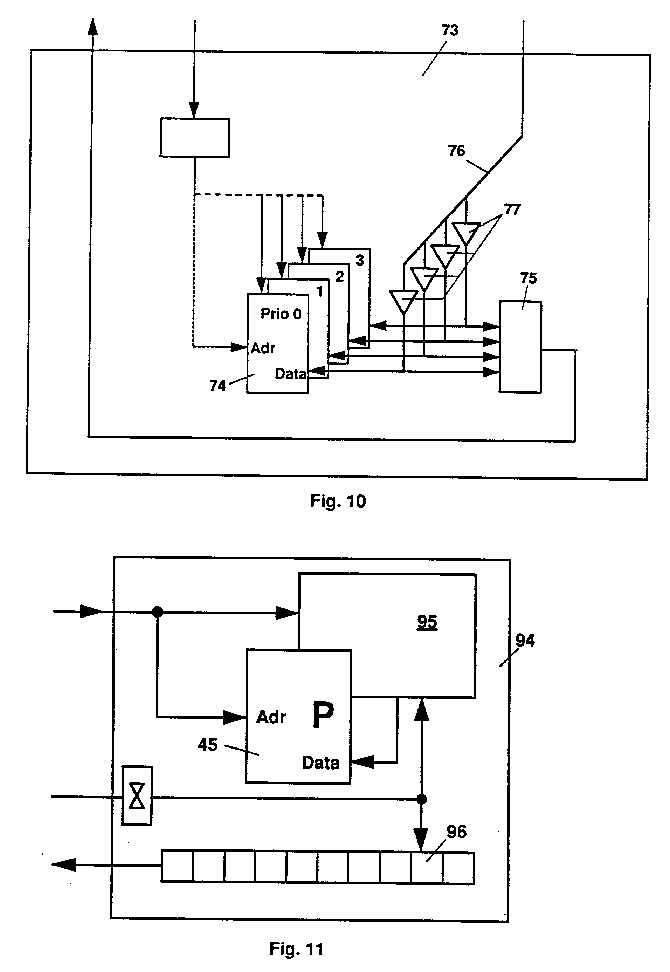

Zur Überwachung der aufgezeigten Möglichkeiten und zur zugeordneten Steuerung der Ausleseschritte dient die in den Figuren 3, 4 angegebene Prioritätslogik 73. Fig. 10 zeigt das Blockschaltbild dieser Logik 73. Sie umfasst einen weiteren adressierbaren Schreib/Lese-Speicher 74, welcher pro vorgesehene Priorität I, II, III eine Speicherebene enthält. Die Anzahl Adressen entspricht der Anzahl m abgehender Leitungen 12. Der Speicherinhalt n einer Adresse in einer Ebene gibt jeweils an, ob die Liste für die entsprechende abgehende Leitung 12 und die entsprechende Priorität leer oder nicht leer ist.

Nach jedem Zufügen oder Wegnehmen eines Elements aus einer Liste (mit Ausnahme der Leerplatzliste 0) werden der Kopf H und der Schwanz T dieser Liste im Vergleicher 59 (Fig. 3) verglichen und das Resultat am Speicherplatz des weiteren Speichers 74 mit der Adresse entsprechend der jeweiligen abgehenden Leitung in der Ebene der entsprechenden Priorität geschrieben. Hierzu wird das jeweilige Vergleichssignal vom Vergleicher 59 herkommend über den Eingang 76 und über gerichtete Eingangselemente 77 (buffer) eingegeben.

Das Auswählen der jeweils höchstpriorisierten nicht-leeren Liste für eine abgehende Leitung 12 erfolgt auf die Art, dass deren Adresse, z.B. δIII an alle Ebenen des Speichers 74 gelegt wird und die zugeordneten Werte parallel ausgelesen werden. Ein Prioritätskodierer 75 bestimmt daraus die entsprechenden Prioritätswerte I, II, III, welche zusammen mit der Leitungsbezeichnung (α, β, δ, µ) die zugeordnete, korrekte Liste anwählt.

Die beschriebene Prioritätslogik 73 erfordert einen relativ geringen Aufwand und arbeitet so, dass keine längeren Bearbeitungszeiten auftreten als im Fall fehlender Prioritätswerte I, II, III. Der ATM-Knoten kann damit mit und ohne Prioritäten gleich schnell arbeiten.

Eine weitere Ergänzung der erfindungsgemässen Steuereinheit 35 bildet eine Rundsende-Fazilität (multicast). Diese erlaubt es, ein und dieselbe Zelle nacheinander auf mehrere, abgehende Leitungen 12 auszusenden, wobei natürlich vorherbestimmbar ist, welches diese Leitungen sind. Diese Ergänzung ist bespielsweise wichtig für die Verteilung von Fernsehbildern und erhält einen hohen Prioritätswert, der durch die beschriebene Prioritätsschaltung 73 jeweils beurteilt wird.

Fig. 11 zeigt das Blockschaltbild der Rundsendelogik 94. Diese Logik umfasst einen zusätzlichen, adressierbaren Schreib/Lese-Speicher 95, der im folgenden als Zielspeicher bezeichnet wird. Dieser Zielspeicher 95 ist parallel zum P-Speicher 45 angeordnet und weist einen zu diesem identischen Adressenbereich auf.

Dem Zielspeicher 95 ist eine Tabelle der zu bedienenden Ausgangsleitungen 12 zugeordnet. Hierzu enthält der Zielspeicher 95 als Inhalt für jedes Element dieser Tabelle ein zugehöriges Destinationswort D mit r Bit Länge. Jedes Bit des Wortes D gibt an, ob die jeweilige rundzusendende Zelle Z auf die jeweilige Ausgangsleitung 12 dieser Nummer ausgesandt werden muss oder nicht. Alle rundzusendenden Zelle Z bilden zusammen eine Warteschlange, der im P-Speicher 45 eine Rundsende-Liste zugeordnet ist.

Die Destinationsworte D werden von der Adressenleseeinheit 33 (Fig. 2) zusamen mit der Listennummer für Rundsendezellen der Steuereinheit 35 übergeben.

Sofern die Liste der Rundsendezellen nicht leer ist, wird zu Beginn einer Zellenperiode das Destinationswort D der ältesten Rundsendezelle in ein Schieberegister 96 geschrieben. Die einzelnen Bits dieses Worts D werden derart ausgelesen, dass für jede abgehende Leitung 12 die Information, ob die Rundsendezelle abzusenden ist, zusammen mit den Informationen aus den Prioritätsspeichern 74 (Fig. 10) dem Prioritätskodierer 75 zugeführt wird, wo sie den höchsten Prioritätswert I, II, III hat.

Dieselbe Information wird dem Zentralspeicher 27 zugeführt, wo sie die Auswahl zwischen normalem Kopf H und speziellem Kopf für Rundsendezellen und Ausgangsleitung 12 erlaubt.

Die Rundsende-Fazilität kann erweitert bzw. ergänzt werden zu einer Rundspruch-Fazilität (broadcast), bei der sogenannte Rundspruchzellen R jeweils parallel auf alle abgehende Leitungen 12 ausgesandt werden. Hierbei ist im Zentralspeicher 27 jeweils nur ein einziger Block notwendig zur Speicherung dieser jeweiligen Rundspruchzelle.

Die erfindungsgemässe Steuereinheit 35 besitzt folgende Eigenschaften und Vorteile:
- Sie arbeitet unabhängig von der ersten Mehrzahl n der ankommenden Leitungen 11 und lässt sich auf einfache Weise an die zweite Mehrzahl m der abgehenden Leitungen 12 anpassen. Hierzu ist lediglich die Zahl der Speicherplätze im H-Speicher 41 und im T-Speicher 43 zu variieren. Dies ist allein über die Steuerung des Sequenzers 38 bzw. eine den Speichern 41, 43 zugeordnete Zeigersteuerung softwaremässig möglich.
- Die Zahl der im H-Speicher 41 und dem T-Speicher 43 vorhandenen Speicherplätze sowie der im P-Speicher 45 enthaltenen Listen kann zwischen einigen wenigen bis zu etwa vierzig reichen, wobei diese Zahl nur durch die verlangte Arbeitsgeschwindigkeit und die verfügbare Technologie begrenzt ist.
- Die Steuereinheit 35 ist leicht anpassbar an jede Grösse des Zentralspeichers 27, die von vielleicht fünfzig bis zu vielen hundert Blöcken reichen kann.
- Wichtig ist auch, dass die Steuereinheit 35 durch nicht beschriebene logische Einheiten konfigurierbar und an die jeweiligen Bedürfnisse anpassbar ist. Dies gilt insbesondere für die weitgehend frei wählbare Initialisierungsart.
- Der H-Speicher 41, der T-Speicher 43 und der P-Speicher 45 sind adressierbare Schreib/Lese-Speicher kommerzieller Art, bevorzugt RAM-Speicher (random access memory). Es sind jedoch auch andere Speicherarten denkbar, z.B. andere Halbleiterspeicher oder Kernspeicher.
- Der H-Speicher 41 und der T-Speicher 43 können so organisiert sein, dass sie nur den Kopf H bzw. den Schwanz T der den abgehenden Leitungen 12 zugeordneten Listen α, β, δ, µ enthalten, nicht jedoch die Leerplatzliste 0. Die Leerplatzlisten 0 lassen sich dann in getrennten, zusätzlichen Speichern unterbringen, was aus praktischen Gründen vorteilhaft sein kann.
- Die drei Speicher 41, 43, 45 können als ein einziger Speicher ausgebildet sein, dessen Speicherplätze so aufgeteilt sind, dass sich drei Bereiche bilden, die den genannten drei Speichern 41, 43, 45 nachgebildet sind.
- Die Steuereinheit 35 ist von der Länge der Zellen Z und von der Art der Adressen des Zentralspeichers 27 weitgehend unabhängig. Sie muss jedoch so schnell arbeiten, dass alle anhand der Figuren 8 und 9 beschriebenen und eventuell weitere Prozedurschritte jeweils in der Übertragungszeit für eine Zelle Z abwickelbar sind. Hierbei ist noch zu berücksichtigen, dass in dieser Zeit gleichzeitig das Einspeichern einer Zelle in den Zentralspeicher 27 und das Aussenden einer anderen Zelle aus diesem Speicher erledigt werden muss. Als Richtwert für die Übertragungszeit einer Zelle können gegenwärtig 2 bis 3 µs genannt werden.

Neben den bereits genannten Vorteilen der Steuereinheit 35 ist vor allem nochmals auf die besondere Flexibilität hinzuweisen, die diese Einheit 35 dem jeweiligen ATM-Knoten 10 gewährt. So kann dieser nicht nur für die Hauptfunktion "gezieltes Weiterleiten von Zellen Z" ausgerüstet werden, sondern ausgerüstet sein für verschieden schnelles Weiterleiten von Zellen aufgrund von Priotitätswerten, für "paralleles" Weiterleiten von Zellen auf mehrere abgehende Leitungen 12, für Umleiten von Zellen im Falle von Störungen, für Veränderungen von Prioritätswerten, für die Einführung neuer Listen bzw- die Elimination bestehender Listen und/oder für die Möglichkeit zur jederzeitigen Kontrolle und Diagnose aller oder speziell auswählbarer Listen.

## Patentansprüche

1. Steuereinheit (35) zum Steuern des Zentralspeichers (27) eines ATM-Knotens (10),
. wobei der ATM-Knoten (10) an eine erste Mehrzahl n ankommender Leitungen (11) und an eine zweite Mehrzahl m abgehender Leitungen (12) angeschlossen ist,
. wobei der ATM-Knoten (10) zum laufenden Empfangen und Weiterleiten von adressierten Zellen (Z) einheitlicher Länge und einheitlichen Aufbaus dient, welche Zellen (Z) über die Leitungen (11, 12) ankommen bzw. abgehen und welchen Zellen (Z) eine Anzahl p unterschiedlicher Prioritäten (I, II, III) zugeordnet ist mit p = 1, 2, 3, ...,
. wobei der Zentralspeicher (27) zum Zwischenspeichern aller Zellen (Z) dient, die auf eine der abgehenden Leitungen (12) ausgesendet werden sollen,
. wobei der Zentralspeicher (27) eine dritte Mehrzahl k von Speicherblöcken aufweist, die über Adressen einzeln anwählbar sind und von denen jeder zur Aufnahme jeweils einer Zelle dient,
. wobei die Steuereinheit (35) Verwaltungs- und Steuermittel sowie einen Sequenzer (38) umfasst, mit deren Hilfe die Speicherblöcke des Zentralspeichers (27) verwaltbar und das sequenzielle Ein- und Auslesen von Zellen in die bzw. aus den Speicherblöcke(n) steuerbar ist, dadurch gekennzeichnet,
- dass die Verwaltungs- und Steuermittel wenigstens einen adressierbaren Schreib/Lese-Speicher (41, 43, 45) umfassen, sowie diesen zugeordnet wenigstens eine Überwachungslogik (71), eine Eingabelogik (48), eine Bus- und Steuerlogik (50) und einen Vergleicher (49),
- dass diese Schreib/Lese-Speicher (41, 43, 45) so aufgebaut sind, dass sie eine der dritten Mehrzahl k plus dem Doppelten der zweiten Mehrzahl m multipliziert mit der Anzahl p plus zwei entsprechende Zahl von Speicherplätzen aufweisen,
- dass jeder Speicherplatz der Schreib/Lese-Speicher (41, 43, 45) ausgebildet ist zur Aufnahme jeweils einer Adresse,
- dass das Doppelte der zweiten Mehrzahl m Speicherplätze multipliziert mit der Anzahl p paarweise den abgehenden Leitungen (12),
- dass die dritte Mehrzahl k Speicherplätze den Speicherblöcken des Zentralspeichers (27), und
- dass zwei Speicherplätze den leeren Speicherblöcken des Zentralspeichers (27)
zugeordnet sind.

2. Steuereinheit nach Anspruch 1,
dadurch gekennzeichnet,
- dass drei adressierbare Schreib/Lese-Speicher (41, 42, 43) vorgesehen sind,
- dass der erste (41) und der zweite Schreib/Lese-Speicher (43) gleich aufgebaut sind, dass beide Speicher (41, 43) eine der zweiten Mehrzahl m multipliziert mit der Anzahl p plus eins entsprechende Zahl von Speicherplätze aufweisen, die paarweise und individuell den abgehenden Leitungen (12; α, β, δ, µ) und den Prioritäten (I, II, III) sowie den leeren Speicherblöcken des Zentralspeichers (27) zugeordnet und die einzeln ansteuerbar sind, und
- dass der dritte Schreib/Lese-Speicher (45) eine der dritten Mehrzahl k entsprechende Zahl von Speicherplätzen aufweist und dass diese Speicherplätze gleich adressiert sind wie die Speicherblöcke des Zentralspeichers (27).

3. Steuereinheit nach Anspruch 2,
dadurch gekennzeichnet,
- dass der Inhalt der Speicherplätze des ersten Schreib/Lese-Speichers (41), die den abgehenden Leitungen (12) und den Prioritäten (I, II, III) zugeordnet sind, Adressen sind, die den Anfang von Listen (α, β, δ, µ) bilden, die den abgehenden Leitungen (12) und den Prioritäten (I, II, III) individuell zugeordnet sind,
- dass der Inhalt des Speicherplatzes (0) des ersten Schreib/Lese-Speichers (41), der den leeren Speicherblöcken des Zentralspeichers (27) zugeordnet ist, eine Adresse ist, die den Anfang einer Liste verfügbarer Speicherplätze im dritten Schreib/Lese-Speicher (45) bildet,
- dass der Inhalt der Speicherplätze des zweiten Schreib/Lese-Speichers (43), die den abgehenden Leitungen (12) und den Prioritäten (I, II, III) zugeordnet sind, Adressen sind, die das Ende der genannten, den abgehenden Leitungen (12) und den Prioritäten (I, II, III) zugeordneten Listen bilden,
- dass der Inhalt des Speicherplatzes des zweiten Schreib/Lese-Speichers (43), der den leeren Speicherblöcken zugeordnet ist, eine Adresse ist, die das Ende der genannten Liste verfügbarer Speicherplätze im dritten Schreib/Lese-Speicher (45) bildet,
- dass der Inhalt der belegten Speicherplätze des dritten Schreib/Lese-Speichers (45) Adressen sind, die zusammen die genannten, den abgehenden Leitungen (12) und den Prioritäten (I, II, III) zugeordneten Listen bilden, derart, dass jede Adresse angibt, an welchem Speicherplatz des dritten Speichers (45) das jeweils nächste Element der jeweiligen Liste abgespeichert ist, und
- dass der Inhalt der verfügbaren Speicherplätze des dritten Schreib/Lese-Speichers (45) Adressen sind, die zusammen die genannte Liste (0) verfügbarer Speicherplätze bilden, derart, dass jede Adresse angibt, an welchem Speicherplatz des dritten Speichers (45) das jeweils nächste Element dieser Liste abgespeichert ist, insgesamt derart, dass alle Listen zusammen mit ihren Elementen alle Speicherplätze des dritten Schreib/Lese-Speichers (45) besetzen.

4. Steuereinheit nach Anspruch 3,
dadurch gekennzeichnet,
dass jedem Element, das unter einer vorgegebenen Adresse in einem Speicherplatz des dritten Schreib/Lese-Speichers (45) gespeichert ist, und das einer Liste (α, β, δ, µ) angehört, die einer abgehenden Leitung (12) und einer Priorität (I, II, III) zugeordnet ist, eine Zelle (Z) zugeordnet ist, die unter der gleichen Adresse im zugeordneten Speicherblock des Zentralspeichers (27) gespeichert ist und für das Aussenden auf die jeweilige abgehende Leitung (12) vorgesehen ist, und
dass jedem Element der Liste (0) verfügbarer Speicherplätze im dritten Schreib/Lese-Speicher (45) ein leerer Speicherblock im Zentralspeicher (27) zugeordnet ist.

5. Steuereinheit nach Anspruch 1,
dadurch gekennzeichnet,
- dass eine Zeigersteuerung vorgesehen ist, die die Speicherplätze des ersten (41) und des zweiten Schreib/Lese-Speichers (43), die einer abgehenden Leitung (12) und einer Priorität (I, II, III) zugeordnet sind, ansteuert.

6. Steuereinheit nach Anspruch 1,
dadurch gekennzeichnet,
dass die Schreib/Lese-Speicher (41, 43, 45) RAM-Speicher sind.

7. Steuereinheit nach Anspruch 1,
dadurch gekennzeichnet,
dass die Bus- und Steuerlogik (50) wenigstens eine Busleitung (67, 68, 69) aufweist, die über Schaltmittel wie Transceiver (53, 55, 57) und Multiplexer mit den anderen genannten Einheiten verbunden ist.

8. Steuereinheit nach Anspruch 1,
dadurch gekennzeichnet,
dass ein Ausgang (52) vorgesehen ist zum Verbinden der Steuereinheit (35) mit dem Zentralspeicher (27), und dass diesem Ausgang (52) wenigstens ein Ausgangsbuffer (61, 63) vorgeschaltet ist.

9. Steuereinheit nach Anspruch 1,
dadurch gekennzeichnet,
dass eine Prioritätslogik (73) vorgesehen ist, die mit dem ersten (41) und dem zweiten Schreib/Lese-Speicher (43) sowie über einen Vergleicher (59) mit der Bus- und Steuerlogik (50) verbunden ist, und
dass die Prioritätslogik (73) eine der Anzahl p unterschiedlicher Prioritätswerte entsprechende Anzahl von Zugriffsspeichern (74) aufweist und einen Prioritätskodierer (75).

10. Steuereinheit nach Anspruch 9,
dadurch gekennzeichnet,
dass eine Rundsendelogik (94) vorgesehen ist, die mit dem dritten Schreib/Lese-Speicher (45) und der Prioritätslogik (73) verbunden ist, und
dass die Rundsendelogik (94) einen Zielspeicher (95) und ein Schieberegister (96) aufweist.

11. Verfahren zum Betrieb eines ATM-Knotens (10),
. wobei der ATM-Knoten (10) laufend adressierte Zellen (Z) einheitlicher Länge und einheitlichen Aufbaus, herkommend von einer ersten Mehrzahl n ankommender Leitungen (11), empfängt, die empfangenen Zellen (Z) durch Zeitmultiplexierung in eine serielle Reihenfolge bringt, die Adressen der Zellen (Z) liest und die Zellen (Z) in die Speicherblöcke eines Zentralspeichers (27) einspeichert,
. wobei der ATM-Knoten (10) laufend Zellen (Z) aus dem Zentralspeicher (27) ausliest und entsprechend der Adresse und einer Priorität (I, II, III) der jeweiligen Zelle (Z) auf eine zugeordnete, einer zweiten Mehrzahl m angehörende, abgehende Leitung (12) aussendet,
. wobei Warteschlangen gebildet werden, die einzeln den abgehenden Leitungen (12) und den Prioritäten (I, II, III) zugeordnet sind, und deren Elemente jeweils alle diejenigen Zellen (Z) gleicher Priorität (I, II, III) sind, die im Zentralspeicher (27) gespeichert sind und für das Aussenden auf die jeweilige abgehende Leitung (12) vorgesehen sind, dadurch gekennzeichnet,
- dass jeder Warteschlange und der Gesamtheit der leeren Speicherblöcke des Zentralspeichers (27) je eine Liste (α, β, δ, µ, 0) mit definiertem Kopfelement und Schwanzelement zugeordnet wird, wobei die Elemente der Listen (α, β, δ, µ, 0) Adressen sind, und wobei die Summe aller Elemente aller Listen (α, β, δ, µ, 0) konstant und gleich ist der Anzahl (k) Speicherblöcke des Zentralspeichers (27),
- dass beim Einspeichern einer Zelle (Z) in den Zentralspeicher (27) jeweils das aktuelle Kopfelement der den leeren Speicherblöcken zugeordneten Liste (0) als neues Schwanzelement derjenigen Liste (α, β, δ, µ) angehängt wird, die derjenigen Warteschlange zugeordnet ist, der die jeweilige Zelle (Z) zugehört, und
- dass beim Auslesen einer Zelle (Z) einer Warteschlange aus dem Zentralspeicher (27) jeweils das aktuelle Kopfelement der dieser jeweiligen Warteschlange zugeordneten Liste (α, β, δ, µ) als neues Schwanzelement der den leeren Speicherblöcken zugeordneten Liste (0) angehängt wird.

12. Verfahren nach Anspruch 11,
dadurch gekennzeichnet,
dass allen Elementen der Listen (α, β, δ, µ, 0) Adressen zugeordnet werden, wobei alle Adressen verschieden sind und grundsätzlich kein Element eine Adresse hat, die gleich diesem Element ist.

13. Verfahren nach Anspruch 12,
dadurch gekennzeichnet,
dass die Gesamtheit der Adressen der Elemente der Listen (α, β, δ, µ, 0) gleich ist der Gesamtheit der Elemente der Listen (α, β, δ, µ, 0) und gleich ist der Gesamtheit der Adressen der Speicherblöcke des Zentralspeichers (27).

14. Verfahren nach Anspruch 11,
dadurch gekennzeichnet,
- dass die Listen (α, β, δ, µ), die den abgehenden Leitungen (12) zugeordnet sind, leitungsweise zyklisch angewählt werden,
- dass jeweils von allen Listen (α, β, δ, µ), die der gleichen abgehenden Leitung (12) zugeordnet sind, diejenige nicht-leere Liste ausgewählt wird, die der höchsten Priorität (I, II, III) zugeordnet ist, und
- dass das Kopfelement dieser jeweiligen Liste jeweils denjenigen Speicherblock des Zentralspeichers (27) bezeichnet, dessen gespeicherte Zelle (Z) als nächste ausgelesen werden soll.

## Claims

1. A control unit (35) for controlling the main memory (27) of an ATM node (10),
. whereby the ATM node (10) is connected to a first plurality n of incoming lines (11) and to a second plurality m of outgoing lines (12);
. whereby the ATM node is used for continuous receipt and advancement of addressed cells (Z) of uniform length and uniform arrangement, which cells (Z) arrive and leave via the lines (11, 12) and which cells are attributed with a number p of different priorities (I, II, III), with p = 1, 2, 3, .......;
. whereby the main memory (27) is used for intermediate storage of all cells (Z) which are to be sent out via one of the outgoing lines (12);
. whereby the main memory (27) is provided with a third plurality k of memory blocks which are selectable individually via addresses and each of which are used for receiving one cell;
. whereby the control unit (35) comprises management and control means as well as a sequencer (38), with the help of which the memory blocks of the main memory (27) are manageable and the sequential read-in and read-out of cells into and out of the memory block(s) is controllable, characterized in
- that the management and control means comprise at least one addressable write/read memory (41, 43, 45) and, allocated thereto, at least one watchdog logic (71), an input logic (48), a bus and control logic (50) and a comparator (49),
- that said write/read memories (41, 43, 45) are arranged in such a way that they are provided with a number of memory locations equivalent to the third plurality k plus twice the second plurality m, multiplied by the number p plus two,
- that every memory location of the write/read memory (41, 43, 45) is arranged for receiving one address,
- that twice the second plurality m of memory locations multiplied by the number p are allocated in pairs to the outgoing lines (12),
- that the third plurality k of memory locations is allocated to the memory blocks of the main memory (27) and
- that two memory locations are allocated to the empty memory blocks of the main memory (27).

2. A control unit as claimed in claim 1, characterized in
- that three addressable write/read memories (41, 42, 43) are provided,
- that the first (41) and the second write/read memory (43) are arranged similarly, that both memories (41, 43) are provided with a number of memory locations equivalent to the second plurality m multiplied by the number p plus one, which locations are allocated in pairs and individually to the outgoing lines (12; α, β, δ, µ) and the priorities (I, II, III) as well as the empty memory blocks of the main memory (27) and are individually selectable, and
- that the third write/read memory (45) is provided with a number of memory locations equivalent to the third plurality k and that said memory locations are addressed in the same manner as the memory blocks of the main memory (27).

3. A control unit as claimed in claim 2, characterized in
- that the contents of the memory locations of the first write/read memory (41), which are allocated to the outgoing lines (12) and the priorities (I, II, III), are addresses which form the beginning of lists (α, β, δ, µ) which are allocated to the outgoing lines (12) and the priorities (I, II, III) individually,
- that the contents of the memory location (0) of the first write/read memory (41), which is allocated to the empty memory locations of the main memory (27), is an address which forms the beginning of a list of available memory locations in the third write/read memory (45),
- that the contents of the memory locations of the second write/read memory (43), which are allocated to the outgoing lines (12) and the priorities (I, II, III), are addresses which form the end of the said lists allocated to the outgoing lines (12) and the priorities (I, II, III),
- that the contents of the memory location of the second write/read memory (43), which is allocated to the empty memory blocks, is an address forming the end of the list of available memory locations in the third write/read memory (45),
- that the contents of the used memory locations of the third write/read memory (45) are addresses which jointly form the said lists allocated to the outgoing lines (12) and the priorities (I, II, III), this being so in such a way that every address indicates at which memory location of the third memory (45) the respective next element of the respective list is stored, and
- that the contents of the available memory locations of the third write/read memory (45) are addresses which jointly form the said list (0) of available memory locations, this being so in such a way that every address indicates at which memory location of the third memory (45) the respective next element of this list is stored, in total in such a way that all lists together with their elements use all memory locations of the third write/read memory (45).

4. A control unit as claimed in claim 3, characterized in
- that every element which is stored under a predefined address in a memory location of the third write/read memory (45) and which belongs to a list (α, β, δ, µ) allocated to an outgoing line (12) and a priority (I, II, III) is allocated to a cell (Z) which is stored under the same address in the allocated memory block of the main memory (27) and is provided for being sent out on the respective outgoing line (12) and
that each element of the list (0) of available memory locations in the third write/read memory (45) is allocated an empty memory block in the main memory (27).

5. A control unit as claimed in claim 1, characterized in
- that a pointer control unit is provided which selects the memory locations of the first (41) and the second write/read memory (43) which is allocated to an outgoing line (12) and a priority (I, II, III).

6. A control unit as claimed in claim 1, characterized in that the write/read memories (41, 43, 45) are RAM memories.

7. A control unit as claimed in claim 1, characterized in that the bus and control logic (50) is provided with at least one bus line (67, 68, 69) which is connected to the said other units via switching means such as transceivers (53, 55, 57) and multiplexers.

8. A control unit as claimed in claim 1, characterized in that an output (52) is provided for connecting the control unit (35) with the main memory (27), and that at least one output buffer (61, 63) is connected upstream of said output (52).

9. A control unit as claimed in claim 1, characterized in that there is provided a priority logic (73) which is connected to the first (41) and the second write/read memory (43) as well as to the bus and control logic (50) via a comparator (59), and that the priority logic (73) is provided with a number of access memories (74) equivalent to the number p of different priority values and a priority coder (75).

10. A control unit as claimed in claim 9, characterized in that a multiaddress logic (94) is provided which is connected to the third write/read memory (45) and the priority logic (73) and that the multiaddress logic (94) is provided with a target memory (95) and a shift register (96).

11. A method for operating an ATM node (10),
. whereby the ATM node (10) continuously receives addressed cells (Z) of uniform length and uniform arrangement, coming from a first plurality n of incoming lines (11), brings the received cells (Z) into a serial sequence by time multiplexing, reads the addresses of the cells (Z) and stores the cells (Z) in the memory blocks of a main memory (27),
. whereby the ATM node (10) continuously reads out cells (Z) from the main memory (27) and sends them out in accordance with the address and a priority (I, II, III) of the respective cell (Z) on an allocated outgoing line (12) belonging to a second plurality m ,
. whereby queues are formed which are individually allocated to the outgoing lines (12) and the priorities (I, II, III), and whose elements are all those cells (Z) of the same priority (I, II, III) which are stored in the main memory (27) and are provided for being sent out on the respective outgoing line (12),
characterized in that
- one list (α, β, δ, µ, 0) with a defined head element and tail element is each allocated to every queue and the entirety of the empty memory blocks of the main memory (27), whereby the elements of the lists (α, β, δ, µ, 0) are addresses and whereby the total of all elements of all lists (α, β, δ, µ, 0) is constant and equivalent to the number k of the memory blocks of the main memory (27),
- that during the storage of a cell (Z) in the main memory (27) the respective current head element of the list (0) allocated to the empty memory blocks is attached as new tail element to the list (α, β, δ, µ) which is allocated to the queue which belongs to the respective cell (Z) and
- that during the readout of a cell (Z) of a queue from the main memory (27) the respective current head element of the list (α, β, δ, µ) allocated to this respective queue is attached as new tail element to the list (0) allocated to the empty memory blocks.

12. A method as claimed in claim 11, characterized in that addresses are allocated to all elements of the lists (α, β, δ, µ, 0), with all addresses being different and principally no element having an address which is equivalent to said element.

13. A method as claimed in claim 12, characterized in that the entirety of the adresses of the elements of the lists (α, β, δ, µ, 0) is equivalent to the entirety of the elements of the lists (α, β, δ, µ, 0) and equivalent to the entirety of the addresses of the memory blocks of the main memory (27).

14. A method as claimed in claim 11, characterized in
- that the lists (α, β, δ, µ) allocated to the outgoing lines (12) are selected in a cyclic manner with respect to the lines,
- that from all lists (α, β, δ, µ) which are allocated to the same outgoing line (12) the non-empty list is selected which is allocated the highest priority (I, II, III) and
- that the head element of this respective list designates the memory block of the main memory (27) whose stored cell (Z) is to be read out as the next one.

## Revendications

1. Unité de commande (35) pour commander la mémoire centrale (27) d'un noeud ATM (10),
. le noeud ATM (10) étant raccordé à une première multitude n de lignes d'arrivée (11) et à une deuxième multitude de lignes de départ (12),
. le noeud ATM (10) servant à recevoir et à acheminer en permanence des cellules adressées (Z) de taille fixe et de structure unitaire, les cellules (Z) arrivant ou partant par les lignes (11, 12) et un nombre p des priorités distinctes (I, II, III) avec p = 1, 2, 3,... leur ayant été attribuées,
. la mémoire centrale (27) servant de mémoire tampon pour toutes les cellules (Z) qui doivent être émises sur l'une des lignes de départ (12),
. la mémoire centrale (27) étant dotée d'une troisième multitude k de blocs mémoire qui sont individuellement sélectionnés via des adresses et dont chacun sert à recevoir une cellule,
. l'unité de commande ( 35) comprenant des supports de gestion et de commande ainsi qu'un séquenceur (38), au moyen desquels sont administrés les blocs mémoire de la mémoire centrale (27) et l'écriture ainsi que la lecture de cellules dans ou à partir des blocs mémoire (n) est commandé,
caractérisée en ce que,
- les supports de gestion et de commande comprennent au moins une mémoire écriture/lecture adressable (41, 43, 45), et, attribué(s) à cette(ces) mémoire(s), au moins une logique de surveillance (71), une logique d'entrée (48) , une logique de bus et une logique de commande (50) ainsi qu'un comparateur (49),
- que ces mémoires écriture/lecture (41, 43, 45) sont conçues de manière à comprendre un nombre de places mémoire équivalent à la troisième multitude k plus le double de la deuxième multitude m multiplié par le nombre n plus deux,
- que chaque place mémoire de la mémoire écriture/lecture (41, 43, 45) est réalisée de manière à recevoir chacune une adresse,
- que le double de la deuxième multitude m de places mémoire, multiplié par le nombre p est attribué par paires aux lignes de départ (12),
- que la troisième multitude k de places mémoire est attribuée aux blocs mémoire de la mémoire centrale (27), et
- que deux places mémoire sont attribuées aux blocs mémoire vacants de la mémoire centrale (27).

2. Unité de commande selon revendication 1,
caractérisée en ce que,
- sont prévues trois mémoires écriture/lecture adressables (41, 42, 43),
- que la première (41) et la deuxième mémoire écriture/lecture (43) sont construites de la même manière, que les deux mémoires (41, 43) comprennent un nombre de places mémoire correspondant à la deuxième multitude m multipliée par le nombre n plus un, qui sont attribuées par paires et individuellement aux lignes de départ (12; α, β, δ, µ) et aux priorités (I, II, III) ainsi qu'aux blocs mémoire vacants de la mémoire centrale (27), et sont pilotables individuellement, et
- que la troisième mémoire écriture/lecture (45) est dotée d'un nombre de places mémoire correspondant à la troisième multitude k, et que ces places mémoire sont adressées de la même manière que les blocs mémoire de la mémoire centrale (27).

3. Unité de commande selon revendication 2,
caractérisée en ce que,
- le contenu des places mémoire de la première mémoire écriture/lecture (41) étant attribuées aux lignes de départ (12) et aux priorités (I, II, III), consiste en des adresses formant le début de listes ( α, β, δ, µ) qui sont individuellement attribuées aux lignes de départ (12) et aux priorités (I, II, III),
- que le contenu des places mémoire (0) de la première mémoire écriture/lecture (41) étant attribuée aux blocs mémoire vacants, de la mémoire centrale (27) est une adresse formant le début d'une liste de places mémoire disponibles dans la troisième mémoire écriture/lecture (45),
- que le contenu des places mémoire de la deuxième mémoire écriture/lecture (43) étant attribuées aux lignes de départ (12) et aux priorités (I, II, III), constitue des adresses formant la fin des listes précitées attribuées aux lignes de départ (12) et aux priorités (I, II, III),
- que le contenu de la place mémoire de la deuxième mémoire écriture/lecture (43) attribuée aux blocs mémoire vacants, est une adresse formant la fin de la liste précitée de places disponibles dans la troisième mémoire écriture/lecture (45),
- que le contenu des places mémoire occupées de la troisième mémoire écriture/lecture (45) sont des adresses formant ensemble les listes précitées attribuées aux lignes de départ (12) et aux priorités (I, II, III),
de manière à ce que chaque adresse indique en quel endroit de la troisième mémoire (45) est stocké chaque élément suivant de la liste respective, et
- que le contenu des places mémoire disponibles de la troisième mémoire écriture/lecture (45) sont des adresses formant ensemble la liste (0) précitée d'emplacements de mémoire disponibles, de manière à ce que chaque adresse indique en quelle place mémoire de la troisième mémoire (45) est stocké chaque élément suivant de cette liste,
dans l'ensemble de manière que toutes les listes occupent, avec leurs éléments, toutes les places de mémoire de la troisième mémoire écriture/lecture (45).

4. Unité de commande selon revendication 3,
caractérisée en ce que,
à chaque élément stocké sous une adresse donnée dans une place de mémoire de la troisième mémoire écriture/lecture (45) et appartenant à une liste (α, β, δ, µ) attribuée à une ligne de départ (12) et une priorité (I, II, III), est allouée une cellule (Z) qui est stockée sous la même adresse dans le bloc mémoire alloué de la mémoire centrale (27) est prévue pour l'émission sur la ligne de départ (12) respective, et
qu'à chaque élément de la liste (0) d'emplacements de mémoire disponibles dans la troisième mémoire écriture/lecture (45) est attribué un bloc de mémoire vacant dans la mémoire centrale (27).

5. Unité de commande selon revendication 1,
caractérisée en ce que,
- il est prévu une commande d'indicateur qui pilote les emplacements de mémoire de la première (41) et de la deuxième mémoires écriture/lecture (43) étant attribuées à une ligne de départ (12) et une priorité (I, II, III).

6. Unité de commande selon revendication 1,
caractérisée en que
les mémoires écriture/lecture (41, 43, 45) sont des mémoires RAM.

7. Unité de commande selon revendication 1,
caractérisée en ce que
la logique de bus et de commande (50) est dotée d'au moins une ligne de bus (67, 68, 69) qui est reliée aux autres unités par le biais de moyens de commutation tels que des émetteurs-récepteurs (53, 55, 57) et des multiplexeurs.

8. Unité de commande selon revendication 1,
caractérisée en ce que,
il est prévu une sortie (52) destinée à relier l'unité de commande (35) à la mémoire centrale (27) et que cette sortie est précédée d'au moins un tampon de sortie (61, 63).

9. Unité de commande selon revendication 1,
caractérisée en ce que,
il est prévu une logique de priorité (73) qui est reliée à la première (41) et à la seconde mémoire écriture/lecture (43) ainsi qu'à la logique de bus et de commande (50), via un comparateur (59), et
que la logique de priorité (73) est dotée d'un nombre de mémoires d'accès (74) correspondant au nombre p de valeurs de priorité distinctes et d'un codeur de priorité (75) .

10. Unité de commande selon revendication 9,
caractérisée en ce que
il est prévu une logique de diffusion (94) qui est reliée à la troisième mémoire écriture/lecture (45) et à la logique de priorité (73), et
que la logique de diffusion (94) est dotée d'une mémoire destinataire (95) et d'un registre coulissant (96).

11. Procédé pour l'exploitation d'un noeud ATM (10),
. selon lequel le noeud ATM (10) reçoit en permanence des cellules adressées (Z) de taille fixe et de structure unitaire en provenance d'une première multitude n de lignes d'arrivée (11), dispose les cellules (Z) reçues par multiplexage dans le temps en une séquence série, lit les adresses des cellules (Z) et stocke les cellules (Z) dans les blocs mémoire d'une mémoire centrale (27),
. selon lequel le noeud ATM (10) lit en permanence des cellules (Z) de la mémoire centrale (27) et les émet en fonction de l'adresse et d'une priorité (I, II, III) de la cellule respective (Z) sur une ligne de départ (12) attribuée appartenant à une deuxième multitude m,
. des queues étant formées qui sont attribuées individuellement aux lignes de départ (12) et aux priorités (I, II, III) et dont les éléments sont constitués respectivement de toutes les cellules (Z) de même priorité (I, II, III), qui sont stockées dans la mémoire centrale (27) et sont prévues pour l'émission sur la ligne de départ (12) respective, caractérisé en ce que
- une liste (α, β, δ, µ, 0) est attribuée à chaque queue et à l'ensemble des blocs mémoire vacants de la mémoire centrale (27), avec un élément d'en-tête et un élément de fin, les éléments des listes (α, β, δ, µ, 0) étant des adresses et la somme de tous les éléments de toutes les listes (α, β, δ, µ, 0) restant constante et étant égale au nombre k de blocs mémoire de la mémoire centrale (27),
- que lors du stockage d'une cellule (Z) dans la mémoire centrale (27), l'élément d'en-tête actuel de la liste (0) attribuée aux blocs mémoire vacants est raccordé comme nouvel élément de fin à la liste (α, β, δ, µ) attribuée à la queue à laquelle appartient la cellule (Z) en question, et
- que lors de la lecture d'une cellule (Z) d'une queue de la mémoire centrale (27), l'élément actuel d'en-tête de la liste attribuée à la queue respective (α, β, δ, µ) est raccordée à la liste (0) attribuée aux blocs mémoire vacants, comme nouvel élément de fin.

12. Procédé selon revendication 11,
caractérisé en ce que
l'on attribue à tous les éléments des listes (α, β, δ, µ, 0) des adresses, toutes les adresses étant distinctes les unes des autres et qu'en principe aucun élément n'a d'adresse qui serait identique à cet élément.

13. Procédé selon revendication 12,
caractérisé en ce que,
l'ensemble des adresses des éléments des listes (α, β, δ, µ, 0) est identique à l'ensemble des éléments de listes (α, β, δ, µ, 0), et est identique à l'ensemble des adresses des blocs mémoire de la mémoire centrale (27).

14. Procédé selon revendication 11,
caractérisé, en ce que
- les listes (α, β, δ, µ, 0) attribuées aux lignes de départ (12) sont appelées cycliquement ligne par ligne,
- que parmi toutes les listes (α, β, δ, µ) attribuées à la même ligne de départ (12), sera sélectionnée la liste non-vacant à laquelle a été allouée la plus haute priorité (I, II, III), et
- que l'élément d'en-tête de cette liste respective désigne respectivement le bloc de mémoire de la mémoire centrale (27) dont la cellule stockée (Z) est la suivante à être lue.
